# EUROPÄISCHE PATENTSCHRIFT

(11) **EP 3 257 655 B1**
(45) Veröffentlichungstag und Bekanntmachung des Hinweises auf die Patenterteilung: **16.10.2019**
(21) Anmeldenummer: 16174253.1
(22) Anmeldetag: 13.06.2016
(51) Int. Cl.: B29C 65/00, B29C 65/82, B64C 1/06, B64C 1/12, B64D 45/00

(54) **SENSORINTEGRATION BEI DER STRUKTURELEMENTFÜGUNG**
SENSOR INTIGRATION DURING THE JOINING OF STRUCUTRAL PARTS
INTÉGRATION DE CAPTEURS AU COURS DE L'ASSEMBLAGE DE PIÈCES STRUCTURELLES

(43) Veröffentlichungstag der Anmeldung: 20.12.2017
(73) Patentinhaber: Airbus Defence and Space GmbH, 82024 Taufkirchen (DE)
(72) Erfinder: KÖRWIEN, Thomas, 85635 Höhenkirchen-Siegertsbrunn (DE); FRIEDBERGER, Alois, 85667 Oberpframmern (DE); HELWIG, Andreas, 80469 München (DE); BEIER, Uwe, 85635 Höhenkirchen (DE); WEILAND, Frank, 86150 Augsburg (DE)
(74) Vertreter: Isarpatent

(56) Entgegenhaltungen:
- WO-A1-2006/058880
- DE-A1-102009 019 774
- US-A- 6 127 822
- US-A1- 2008 289 426
- US-A1- 2013 147 636
- US-A1- 2016 077 027
- MECHAM M: "UNDER THE SKIN", AVIATION WEEK AND SPACE TECHNOLOGY, MCGRAW-HILL COMPAGNY, NEW YORK, NY, US, Bd. 166, Nr. 15, 16. April 2007 (2007-04-16), Seite 79/80, XP001540137, ISSN: 0005-2175
- Tom (yitao) Zhuang: "Design of Smart Adhesive Films for BondlineIntegrity Monitoring", , 8. Februar 2012 (2012-02-08), XP055025731, Gefunden im Internet: URL:http://structure.stanford.edu/document s\projects\zhuang.pdf [gefunden am 2012-04-26]

## Beschreibung

Die Erfindung betrifft ein Verfahren zum Fügen von Strukturelementen aus wenigstens einem faserverstärkten Kunststoff.

Derartige Verfahren kommen bei unterschiedlichen aus Strukturelementen zusammengesetzten Bauteilen, insbesondere auch auf dem Sektor der Luft- und Raumfahrtechnik, zum Einsatz, bei denen häufig Abwägungen hinsichtlich des Kosten-Gewichts-Verhältnisses die Hauptrolle spielen. Einzubeziehende Überlegungen können in diesem Zusammenhang zum einen reduzierbare oder vermeidbare Prozessrisiken mit Blick auf die (zunehmende) Komplexität von Strukturelementen, aber auch auf deren Anzahl betreffen. Zum anderen spielen auch Überlegungen zur Gewichtsersparnis gegenüber im Wesentlichen vergleichbaren Verfahren, die Unversehrtheit des Faserstruktur bzw. Matrix der Strukturelemente beider Herstellung und der Umstand, dass gegebenenfalls mehrere unterschiedlich herzustellende Teile kombiniert werden müssen, eine Rolle. Zum Fügen von Strukturelementen mit einem Sensorelement kennt man bereits die US 2016/0077027 A1, in welcher Sensorknoten mit einer Oberfläche eines Strukturelements mit Hilfe einer Klebeschicht verklebt werden. Dokument US 6127822 offenbart zwei Faserverbundbauteile mittels eines Sensorfolienelementes zu verbinden. Das Sensorfolienelement kann thermoplastisch sein.

Die zu verarbeitenden, zu einem Bauteil zu fügenden Strukturelemente aus einem faserverstärkten Kunststoff liegen dabei in der Regel als Faser-Matrix-Halbzeuge vor, die zur Herstellung des Bauteils unter Beaufschlagung mit Druck und Temperatur ausgehärtet werden müssen. Diese Halbzeuge, die zur Weiterverarbeitung nicht selten als bahnenförmige Vorformlinge vorgehalten werden, auf diese Gestalt aber nicht festgelegt sind., werden auch "Prepregs" (Kurzform zu engl. preimpregnated fibres) genannt und bestehen meist aus einer duroplastischen Matrix, die mit Fasern gefüllt, aber nicht ausgehärtet ist.. Die betreffende Matrix befindet sich dabei also im teilvernetzten Zustand und kann durch Erwärmung wieder verflüssigt werden.

Die erwähnten Halbzeuge können dabei in unterschiedlich aufwändigen Verfahren gefügt werden, die zum Teil mit nicht unerheblichem Aufwand verbunden sind. Ferner können die zu fügenden Strukturelemente mit zusätzlichen Haltemitteln, wie Nieten oder auch mit Versteifungsmitteln versehen sein.

Es besteht daher die Aufgabe, ein Verfahren zur Verfügung zu stellen, das kostengünstig und bei geringem Aufwand und Gewicht ein widerstandsfähiges und haltbares gefügtes Bauteil liefert.

Diese Aufgabe wird erfindungsgemäß durch die kennzeichnenden Merkmale des Anspruchs 1 gelöst. Die Lösung besteht demnach insbesondere darin, ein Verfahren einzusetzen, bei dem zumindest die folgenden Verfahrensschritte durchgeführt werden:
a. Bereitstellen von wenigstens zwei Strukturelementen aus wenigstens einem faserverstärkten Kunststoff mit einer jeweiligen Matrix:
b. Bereitstellen wenigstens eines Sensorfolienelements aus einem thermoplastischen Kunststoff;
c. Anordnung des wenigstens einen Sensorfolienelements an einer Fläche eines der Strukturelemente oder zwischen zu fügenden Flächen der wenigstens zwei zu fügenden Strukturelemente;
d. Herstellung des zu fügenden Bauteils in einem Aushärteprozess, wobei unter Wärmeeinfluss das Sensorfolienelement zunächst angelöst wird und anschließend wieder vernetzt und hierbei mit der Matrix der Strukturelemente verbunden wird

Die Erfindung besteht also darin, zunächst an einem oder gleich zwischen beiden Halbzeugen der Strukturelemente, nachdem diese bereitgestellt wurden, ein Folienelement mit Sensoreigenschaften aus einem thermoplastischen Kunststoff bereitzustellen. Bei dem anschließenden Aushärteprozess der Matrix der Strukturelemente, der unter Wärme stattfindet, wird das Sensorfolienelement zunächst angelöst. Anschließend vernetzt das Sensorfolienelement wieder und wird hierbei mit der Matrix der Strukturelemente verbunden . Bei den Strukturelementen handelt es sich häufig um solche mit einer CFK-Matrix (kohlenstofffaserverstärkter Matrix), die bei Temperaturen in der Größenordnung von 180°C verarbeitet werden. Der Thermoplast des Sensorfolienelements kann passend zu der Matrix und der Temperatur, die unter seiner Zersetzungstemperatur liegen muss, gewählt werden.

Weitere vorteilhafte Merkmale beinhalten die Unteransprüche.

Der mittels des wenigstens einen Sensorfolienelements stattfindende Fügeprozess zwischen den Strukturelemente ist eine Art Foliendiffusionsschweißprozess, bei dem in vorteilhafter Weise ein amorpher Thermoplast als robuste Zwischenphase zwischen den Harzsystemen der Strukturelemente gebildet wird. Dies ist prinzipiell in mehreren unterschiedlichen Prozessen möglich, nämlich beispielsweise mit auch bereits (teilweise) ausgehärteten Strukturelementen, auf welche ein Folienelement aufgebracht wird, das bei einer anschließenden Aushärtung die Zwischenphase bildet, weiter kann durch Einbringen eines bereits ausgehärteten, mit einem Folienelement versehenen Strukturelements in ein Injektionsverfahren der Nachbearbeitungsaufwand von dessen Endprodukt und die Komplexität anzugfertigender Teilstrukturen verringert werden. Ähnliche Vorteile ergeben sich auch, wenn ein bereits ausgehärtetes mit einem Folienelement versehenes Strukturelement mit einem noch nicht ausgehärteten Strukturelement ausgehärtet wird.

Die gewünschte, die Strukturelemente miteinander verbindende Zwischenphase wird bei einer zweckmäßigen Variante des erfindungsgemäßen Verfahrens in geeigneter Weise durch ein Sensorfolienelement gebildet, das aus einem Polyimid oder einem Polysulfon ausgebildet ist.

Besonders bevorzugt ist das Sensorfolienelement als Sensorträger aus Polyetherimid oder Polyethersulfon ausgebildet. Mit den erwähnten Materialien lassen sich verhältnismäßig leichtgewichtige Fügeverbindungen zu vertretbaren Kosten zwischen den Strukturelementen realisieren; diese sind nicht giftig und bilden eine haltbare Zwischenphase mit den Harzen der Strukturelemente. Die Glasübergangstemperatur ist höher als die Arbeitstemperatur bei der Ausbildung der Zwischenphase, die Sensorfolienelemente sind form- und dickenstabil, haben ein passendes thermisches Expansionsverhalten, benötigen keine Vorbehandlung und sind gegenüber einer Reihe von aggressiven Stoffen wie Lösungsmittel oder Treibstoffe beständig sowie kratz- und verschleißbeständig, so dass sich insgesamt beim Fügeprozess ein günstiges, gut beherrschbares Bauteil erzielen lässt.

Um mittels des wenigstens einen Folienelements zusätzliche Erkenntnisse etwa über bestimmte Umgebungsbedingungen bei dessen Einsatz gewinnen zu können, kann bei einer vorteilhaften Variante das erfindungsgemäße Verfahren vorsehen, das Sensorfolienelement vor dem Bereitstellen als Sensorträger auszubilden, der mit wenigstens einem Sensor oder einer Mehrzahl von Sensoren versehen wird. Mittels der betreffenden Sensoren können etwa Zustandsgrößen des Fügeprozesses gewonnen oder überwacht werden. Dabei können auch mehrere Sensorfolienelemente mit jeweils ein oder mehreren Sensoren vorgesehen sein.

In vorteilhaften Weiterbildungen kann es dabei vorgesehen sein, dass in Varianten des erfindungsgemäßen Verfahrens die Anordnung des wenigstens einen Sensorfolienelements an einer Fläche eines der Strukturelemente oder zwischen zu fügenden Flächen der wenigstens zwei zu fügenden Strukturelemente durch die Sensoren des Sensorträgers überwacht wird.

Um auch nach der Herstellung des gefügten Bauteils dessen weitere Integrität oder dessen sich ändernde Umgebung überwachen und notwendigenfalls Maßnahmen ergreifen zu können, kann eine weitere vorteilhafte Variante vorsehen, dass der Sensorträger im Betrieb des gefügten Strukturelements zur Überwachung von dessen Zustand und/oder zur Schadensdetektion eingesetzt wird. Dabei können etwa im Sinne eines "Structural Health Monitoring" (SHM) Strukturen von Bauteilen mit tragenden Eigenschaften und/oder Strukturen mit statischer Lagerung wie beispielsweise Trag- oder Rumpfflächen von Schiffs- und Luftfahrzeugen oder auch Rotorblätter überwacht werden. Von Vorteil kann hierbei sein, dass es durch den Umstand, dass jederzeit Werte der Überwachung vorliegen, die eine Zustandsbeschreibung hinsichtlich des Vorliegens oder nahen Eintretens eines Schadens gestatten, gelingt, dessen Einfluss auf die Eigenschaften und Haltbarkeit der jeweiligen Struktur zu beurteilen und derart etwa Wartungszeiten eingespart werden können.

Für solche Zustandsbeschreibungen kann es von Vorteil sein, dass bei einer Weiterbildung des erfindungsgemäßen Verfahrens durch die Sensoren einer oder mehrere für den jeweiligen Prozess relevante Parameter erfasst werden. Mit Prozess kann dabei auch der "Normalbetrieb" des Bauteils gemeint sein.

Bevorzugt können dabei als Parameter die Temperatur, der Druck und/oder der Aushärtegrad der Strukturelemente und/oder der mit dem Sensorfolienelement gebildeten Zwischenphase erfasst werden.

Soll mit dem Sensorträger die Temperatur als Parameter erfasst werden, so kann bei einer Variante des erfindungsgemäßen Verfahrens der Sensorträger mit wenigstens einer metallischen Leiterbahn, insbesondere mit einer mäandrierenden metallischen Leiterbahn versehen sein, so dass die Fläche des Folienelements beispielsweise gleichmäßig abgerastert und Temperaturwerte im Wege von Widerstandmessungen gewonnen werden können. Es sind aber auch andere Anordnungen von Sensoren denkbar. Eine andere vorteilhafte Variante, die eine alternative Messmethode bildet sieht es zweckmäßigerweise vor, den Sensorträger zur Erfassung der Temperatur als Parameter mit metallischen Leiterbahnen aus wenigstens zwei metallischen Werkstoffen versehen wird, so dass diese im Prinzip ein Thermoelement bilden.

Um Auskunft über die Belastung von Strukturelementen bzw. Bauteilen nach deren Herstellung gewinnen zu können, kann bei einer anderen Ausführung zumindest einer der Sensoren oder eine Teilgruppe von Sensoren als Kombination eines Sensors und eines Aktors ausgebildet sein. Bevorzugt können hierbei der zumindest eine Sensor bzw. die Sensoren als Ultraschall-Transducer, etwa als piezoelektrisches Element, ausgebildet sein. Damit kann entweder eine punktförmige Gewinnung von Werten eingesetzt werden, es ist aber auch der Einsatz einer Lamb-Wellen-Technik (gemischte Druck- und Scherwellen) zur online Schadensdetektion denkbar. Mit Lamb-Wellen lassen sich größere Bereiche von Bauteilen prüfen, ohne dass ein Scannen wie bei zuvor erwähnten punktförmigen Ultraschallprüfung erforderlich ist. Die bei einer Schadensentstehung, einem sogenannten Impact, oder bei einem Anwachsen eines Schadens hervorgerufenen Lamb-Wellen lassen sich mit Piezo-Sensoren aufnehmen und entsprechend auswerten. Überdies können aber auch mit einem Netz von verteilten Aktuatoren und Sensoren definiert Lamb-Wellen eingeschallt, empfangen und ausgewertet werden.

Schließlich können zweckmäßige Varianten des erfindungsgemäßen Verfahrens zur Bauteilfügung darin bestehen, dass der Aushärteprozess des Verfahrens heißisostatisch oder unidirektional durchgeführt wird, wobei bei ersterem Prozess keine Vorzugsrichtung der Druckbeaufschlagung existiert.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird nachstehend anhand von Ausführungsbeispielen in der Zeichnung näher erläutert. In teilweise schematisierter Darstellung zeigt hierbei die Zeichnungsfigur eine ebene geschnittene Seitenansicht eines Ausführungsbeispiels einer Sensoranordnung mit Sensorträger, Sensorstruktur und Passivierung zur Anordnung beispielsweise zwischen Kunststofflagen eines Strukturelements.

Die einzige Zeichnungsfigur 1 zeigt dabei eine im Ganzen mit 10 bezeichnete Sensoranordnung, die für eine in situ Erfassung von Prozessparametern an oder innerhalb von nicht im Detail dargestellten Strukturelementen 1 vorgesehen ist, wofür Leiterbahnen 16 als Sensorstrukturen 15 oder Teile von diesen auf ein als Sensorträger 20 ausgebildetes Folienelement 5 aufgebracht wurden. Zur Durchführung von Temperaturmessungen, also zur Bestimmung von Temperaturen als Zustandsgrößen können Sensorstrukturen 15 dabei als Widerstandsthermometer eingesetzt werden fortgeführt. Dieses wird zwischen den nicht weiter dargestellten faserverstärkten Kunststofflagen (CFK-Lagen) des Strukturelements 1 einlaminiert und soll beispielsweise während des Infiltrations- und Aushärtungsprozesses eine lokale Temperaturanalyse ermöglichen.

Beispielhaft beträgt in dem vorliegenden Ausführungsbeispiel die Breite der dargestellten Leiterbahn 16 als Messleitung oder Versorgungsleitung 30 µm. Zur präzisen Ermittlung der vorliegenden Temperatur können hierbei zwei Versorgungs- und zwei Messleitungen vorteilhaft sein. Als Substratmaterial des Sensorträgers 20 wurden eine Thermoplastfolie aus Polyetherimid (PEI) verwendet.

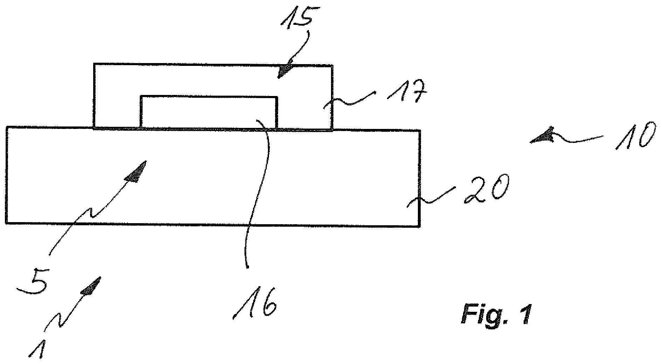

Im ersten Fertigungsschritt werden nicht dargestellte Zuleitungen und Kontaktpads beispielsweise mittels eines Inkjetverfahrens gedruckt. Anschließend wird die Sensorstruktur 15 etwa mittels eines Aerosoljet-Verfahrens aufgebracht. Als abschließender Fertigungsschritt wird eine Isolierschicht 17 über die Leiterbahnen 16 der Sensorstruktur 15 aufgebracht, die die Sensorstruktur 15 gegenüber der leitfähigen Umgebung abschirmt. Für das Aufbringen der Isolierschicht 17, die sich, wie in der Fig.1 zu erkennen ist, im Wesentlichen auf der dem Sensorträger 20 abgewandten Seite der Sensorstruktur 15 befindet, wird beispielsweise die Siebdrucktechnik verwendet. Eine derartige Passivierung kann zum Beispiel erneut als eine Schicht aus PEI, aber auch als eine Polyimid-Schicht oder als ein Lötstopplack aufgebracht sein. Nach jedem Siebdruckprozess kann die aufgetragene Passivierungsschicht 17 ausgehärtet werden.

Die an den Sensorträgern 20 aufgebrachten Sensorstrukturen 15 werden zwischen den nicht dargestellten CFK Lagen eines Strukturelements 1 eingelegt, welches anschließend zur Herstellung der stoffschlüssigen Fügeverbindung zwischen Sensorträger 20 und Strukturelement 1 im Autoklaven infiltriert und ausgehärtet wird. Die vorstehend beschriebene Erfindung betrifft demnach ein Verfahren zum Fügen von Strukturelementen 1 zu einem Bauteil aus wenigstens einem faserverstärkten Kunststoff, mit den Verfahrensschritten: Bereitstellen von wenigstens zwei Strukturelementen 1 aus wenigstens einem faserverstärkten Kunststoff mit einer jeweiligen Matrix; Bereitstellen wenigstens eines Sensorfolienelements 5 aus einem thermoplastischen Kunststoff; Anordnung des wenigstens einen Sensorfolienelements 5 an einer Fläche eines der Strukturelemente 1 oder zwischen zu fügenden Flächen der wenigstens zwei zu fügenden Strukturelemente 1 und Herstellung des zu fügenden Bauteils in einem Aushärteprozess. Das Sensorfolienelement 5 geht bei Herstellung des Strukturelements 1 mit dessen Matrix eine stoffschlüssige Fügeverbindung ein.

Obwohl die vorliegende Erfindung anhand eines bevorzugten Ausführungsbeispiels vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung, der durch die Ansprüche definiert wird, abzuweichen.

### Bezugszeichenliste

- 1: Strukturelement
- 5: Sensorfolienelement
- 10: Sensoranordnung
- 15: Sensorstruktur
- 16: Leiterbahn
- 17: Isolierschicht
- 20: Sensorträger

## Patentansprüche

1. Verfahren zum Fügen von Strukturelementen (1) zu einem Bauteil aus wenigstens einem faserverstärkten Kunststoff, umfassend die folgenden Verfahrensschritte:
a. Bereitstellen von wenigstens zwei Strukturelementen (1) aus wenigstens einem faserverstärkten Kunststoff mit einer jeweiligen Matrix;
b. Bereitstellen wenigstens eines Sensorfolienelements (5) aus einem thermoplastischen Kunststoff;
c. Anordnung des wenigstens einen Sensorfolienelements an einer Fläche eines der Strukturelemente (1) oder zwischen zu fügenden Flächen der wenigstens zwei zu fügenden Strukturelemente (1);
d. Herstellung des zu fügenden Bauteils in einem Aushärteprozess der Matrix der Strukturelemente, wobei unter Wärmeeinfluss das Sensorfolienelement (5) zunächst angelöst wird und anschließend wieder vernetzt und hierbei mit der Matrix der Strukturelemente (1) verbunden wird.

2. Verfahren nach Anspruch 1, **dadurch gekennzeichnet, dass** bei der Herstellung des Bauteils an den zu fügenden Flächen der Strukturelemente (1) durch das Sensorfolienelement mit der Matrix des jeweiligen Strukturelements (1) eine beständige Zwischenphase ausgebildet wird.

3. Verfahren nach Anspruch 1 oder 2, **dadurch gekennzeichnet, dass** das Sensorfolienelement (5) ein Polyimid oder ein Polysulfon umfasst.

4. Verfahren nach Anspruch 3, **dadurch gekennzeichnet, dass** das Sensorfolienelement (5) einen Sensorträger aus Polyetherimid oder Polyethersulfon ausbildet.

5. Verfahren nach einem der vorhergehenden Ansprüche, **dadurch gekennzeichnet, dass** das wenigstens eine Sensorfolienelement (5) vor dem Bereitstellen als Sensorträger ausgebildet wird, der mit wenigstens einem Sensor oder einer Mehrzahl von Sensoren versehen wird.

6. Verfahren nach Anspruch 5, **dadurch gekennzeichnet, dass** mindestens einer der unter Punkt c. erwähnten Verfahrensschritte von wenigstens einem Sensor oder einer Mehrzahl von Sensoren des Sensorträgers überwacht wird.

7. Verfahren nach einem der Ansprüche 5 und 6, **dadurch gekennzeichnet, dass** durch die Sensoren einer oder mehrere für den jeweiligen Prozess relevante Parameter erfasst werden.

8. Verfahren nach Anspruch 7, **dadurch gekennzeichnet, dass** als Parameter die Temperatur, der Druck und/oder der Aushärtegrad erfasst werden.

9. Verfahren nach Anspruch 8, **dadurch gekennzeichnet, dass** der Sensorträger zur Erfassung der Temperatur als Parameter mit wenigstens einer metallischen Leiterbahn, insbesondere mit einer mäandrierenden metallischen Leiterbahn versehen wird.

10. Verfahren nach Anspruch 8, **dadurch gekennzeichnet, dass** der Sensorträger zur Erfassung der Temperatur als Parameter mit metallischen Leiterbahnen aus wenigstens zwei metallischen Werkstoffen versehen wird.

11. Verfahren nach einem der Ansprüche 5 bis 10, **dadurch gekennzeichnet, dass** zumindest einer der Sensoren oder eine Teilgruppe der Sensoren als Sensor/Aktor Kombination ausgebildet wird.

12. Verfahren nach einem der Ansprüche 5 bis 11, **dadurch gekennzeichnet, dass** der zumindest eine Sensor als Ultraschall-Transducer, bspw. als piezoelektrisches Element, ausgebildet ist.

13. Verfahren nach einem der vorhergehenden Ansprüche, **dadurch gekennzeichnet, dass** Punkt d. des Verfahrens heißisostatisch oder unidirektional durchgeführt wird.

14. Verfahren nach einem der vorhergehenden Ansprüche, **dadurch gekennzeichnet, dass** das Fügen zweier Strukturelemente (1), zwischen welchen das Sensorfolienelement angeordnet ist, überwacht wird.

15. Verfahren nach einem der Ansprüche 5 bis 14, **dadurch gekennzeichnet, dass** im Betrieb des gefügten Bauteils zur Überwachung von dessen Zustand und/oder zur Schadensdetektion der oder die an dem Sensorträger befindlichen Sensoren eingesetzt werden.

## Claims

1. Method for joining structural elements (1) to form a component mad of at least one fibre-reinforced plastic, comprising the following method steps:
a. providing at least two structural elements (1) made of at least one fibre-reinforced plastic with a respective matrix;
b. providing at least one sensor film element (5) made of a thermoplastic material;
c. arranging the at least one sensor film element on a surface of one of the structural elements (1) or between surfaces to be joined of the at least two structural elements (1) to be joined;
d. producing the component to be joined in a curing process of the matrix of the structural elements, wherein the sensor film element (5) is initially dissolved under the influence of heat and then cross-linked again and is hereby connected to the matrix of the structural elements (1).

2. Method according to Claim 1, **characterized in that** during the production of the component, a permanent intermediate phase is formed on the surfaces to be joined of the structural elements (1) by the sensor film element having the matrix of the respective structural element (1).

3. Method according to Claim 1 or 2, **characterized in that** the sensor film element (5) comprises a polyimide or a polysulfone.

4. Method according to Claim 3, **characterized in that** the sensor film element (5) forms a sensor carrier made of polyetherimide or polyethersulfone.

5. Method according to one of the preceding claims, **characterized in that** before being provided, the at least one sensor film element (5) is formed as a sensor carrier, which is provided with at least one sensor or a plurality of sensors.

6. Method according to Claim 5, **characterized in that** at least one of the method steps mentioned under item c. is monitored by at least one sensor or a plurality of sensors of the sensor carrier.

7. Method according to one of Claims 5 and 6, **characterized in that** one or more parameters that are relevant to the respective process are detected by the sensors.

8. Method according to Claim 7, **characterized in that** the parameters detected are the temperature, the pressure and/or the degree of curing.

9. Method according to Claim 8, **characterized in that** the sensor carrier for detecting the temperature as a parameter is provided with at least one metallic conductor track, in particular with a meandering metallic conductor track.

10. Method according to Claim 8, **characterized in that** the sensor carrier for detecting the temperature as a parameter is provided with metallic conductor tracks made of at least two metallic materials.

11. Method according to one of Claims 5 to 10, **characterized in that** at least one of the sensors or a subgroup of the sensors is formed as a sensor/actuator combination.

12. Method according to one of Claims 5 to 11, **characterized in that** the at least one sensor is formed as an ultrasonic transducer, for example as a piezoelectric element.

13. Method according to one of the preceding claims, **characterized in that** item d. of the method is carried out thermally isostatically or unidirectionally.

14. Method according to one of the preceding claims, **characterized in that** the joining of two structural elements (1) between which the sensor film element is arranged is monitored.

15. Method according to one of Claims 5 to 14, **characterized in that** during the operation of the joined component, the sensor or sensors situated on the sensor carrier are used to monitor the state of the said component and/or to detect damage.

## Revendications

1. Procédé d'assemblage d'éléments structurels (1) pour obtenir un composant formé à partir d'au moins une matière synthétique renforcée de fibres, le procédé comprenant les étapes suivantes :
a. fournir au moins deux éléments structurels (1) formés à partir d'au moins une matière synthétique renforcée de fibres pourvue d'une matrice respective ;
b. fournir au moins un élément pelliculaire formant capteur (5) formé à partir d'une matière synthétique thermoplastique ;
c. disposer l'au moins un élément pelliculaire formant capteur sur une surface de l'un des éléments structurels (1) ou entre des surfaces à assembler des au moins deux éléments structurels (1) à assembler ;
d. réaliser le composant à assembler dans un processus de durcissement de la matrice des éléments structurels, l'élément pelliculaire formant capteur (5) étant tout d'abord dissous sous l'influence de la chaleur puis réticulé à nouveau et ainsi relié à la matrice des éléments structurels (1).

2. Procédé selon la revendication 1, **caractérisé en ce qu'**une phase intermédiaire stable est formée par l'élément pelliculaire formant capteur pourvu de la matrice de l'élément structurel respectif (1) au niveau des surfaces à assembler des éléments structurels (1) lors de la réalisation du composant.

3. Procédé selon la revendication 1 ou 2, **caractérisé en ce que** l'élément pelliculaire formant capteur (5) comprend un polyimide ou un polysulfone.

4. Procédé selon la revendication 3, **caractérisé en ce que** l'élément pelliculaire formant capteur (5) forme un support de capteur en polyétherimide ou en polyéthersulfone.

5. Procédé selon l'une des revendications précédentes, **caractérisé en ce que** l'au moins un élément pelliculaire formant capteur (5) est conçu avant la réalisation comme un support de capteur qui est pourvu d'au moins un capteur ou d'une pluralité de capteurs.

6. Procédé selon la revendication 5, **caractérisé en ce que** l'une au moins des étapes de procédé mentionnées au point c. est surveillée par au moins un capteur ou une pluralité de capteurs du support de capteur.

7. Procédé selon l'une des revendications 5 et 6, **caractérisé en ce qu'**au moins un paramètre relatif au processus respectif est détecté par les capteurs.

8. Procédé selon la revendication 7, **caractérisé en ce que** la température, la pression et/ou le degré de dureté sont détectés comme paramètres.

9. Procédé selon la revendication 8, **caractérisé en ce que** le support de capteur destiné à détecter la température comme paramètre est pourvu d'au moins une piste conductrice métallique, en particulier d'une piste conductrice métallique en méandre.

10. Procédé selon la revendication 8, **caractérisé en ce que** le support de capteur destiné à détecter la température comme paramètre est pourvu de pistes conductrices métalliques formées à partir d'au moins deux matières métalliques.

11. Procédé selon l'une des revendications 5 à 10, **caractérisé en ce que** l'un au moins des capteurs ou un sous-ensemble des capteurs est conçu sous la forme d'une combinaison capteur/actionneur.

12. Procédé selon l'une des revendications 5 à 11, **caractérisé en ce que** l'au moins un capteur est conçu comme un transducteur à ultrasons ou un élément piézoélectrique.

13. Procédé selon l'une des revendications précédentes, **caractérisé en ce que** le point d. du procédé est mis en oeuvre de manière unidirectionnelle ou isostatique à température élevée.

14. Procédé selon l'une des revendications précédentes, **caractérisé en ce que** l'assemblage de deux éléments structurels (1), entre lesquels l'élément pelliculaire formant capteur est disposé, est surveillé.

15. Procédé selon l'une des revendications 5 à 14, **caractérisé en ce que** l'au moins un capteur situé au niveau du support de capteur est utilisé dans le fonctionnement du composant assemblé pour surveiller l'état de celui-ci et/ou pour la détection de dommages.
